**Europäisches Patentamt**

(19) **European Patent Office**

**Office européen des brevets**

(11) Numéro de publication: **0 300 843**
**B1**

(12) # FASCICULE DE BREVET EUROPEEN

(45) Date de publication du fascicule du brevet:
13.06.90

(51) Int. Cl.⁵: **F16H 3/12**

(21) Numéro de dépôt: **88401455.6**

(22) Date de dépôt: **13.06.88**

(54) **Dispositif de freinage de pignons d'une boîte de vitesses de véhicule automobile.**

(30) Priorité: **20.07.87 FR 8710239**

(43) Date de publication de la demande:
**25.01.89 Bulletin 89/4**

(45) Mention de la délivrance du brevet:
**13.06.90 Bulletin 90/24**

(84) Etats contractants désignés:
**DE GB IT**

(56) Documents cités:
**FR-A- 2 263 428**
**US-A- 4 510 818**
**US-A- 4 660 434**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Raynaud Jean-Claude, 2 rue Florentin Lasson, F-78800 Houilles(FR)**

(74) Mandataire: **Kohn, Philippe et al, c/o CABINET LAVOIX 2, place d'Estienne d'Orves, F-75441 Paris Cédex 09(FR)**

**Description**

La présente invention a pour objet un dispositif de freinage de pignons d'une boîte de vitesses de véhicule automobile.

Les engrenages des boîtes de vitesses possèdent une inertie en rotation qui, lors de l'engagement à l'arrêt d'un rapport non synchronisé tel que par exemple la marche arrière, entraîne un craquement très désagréable pour l'utilisateur du véhicule équipé d'une telle boîte de vitesses.

Différentes solutions ont été proposées pour remédier à cet inconvénient. Il est possible d'équiper le rapport de marche arrière d'un synchroniseur à friction qui agit directement sur le pignon de marche arrière pendant la course de passage de la marche arrière. Etant donné que le couple de freinage nécessaire pour arrêter la rotation des engrenages d'une boîte de vitesses est proportionnel au cube du rapport de multiplication et au diamètre du synchroniseur, le freinage au moyen d'un synchroniseur de petit diamètre équipant un rapport court de la boîte de vitesses, tel que par exemple la marche arrière, est particulièrement défavorable.

On a également proposé de ralentir les pignons en utilisant un des synchroniseurs de la boîte de vitesses, tel que par exemple celui équipant le quatrième rapport, en l'entraînant partiellement durant le début de la course de sélection et de passage de la marche arrière. Une telle solution est notamment décrite dans le brevet US n° 4.510.818 qui montre les caractéristiques du préambule de la revendication 1. On constate toutefois que dans un tel système, plusieurs pièces frottantes interviennent de façon complexe et peu fiable, et le dégagement du synchroniseur est réalisé de manière imprécise, élastiquement et non positivement, lors de l'engagement de la denture de marche arrière, ce qui se traduit par une dureté de commande et des craquements lors du passage de ce rapport.

Afin de remédier aux inconvénients des solutions antérieures, la présente invention propose un dispositif de freinage de pignons d'une boîte de vitesses comportant au moins un rapport équipé d'un synchroniseur à friction actionné par un premier coulisseau dont le déplacement axial, dans le sens du passage, est commandé par un doigt préalablement engagé dans une crosse de commande solidaire du coulisseau, depuis une position de point mort, par un mouvement de sélection selon une direction perpendiculaire à l'axe de déplacement du coulisseau, et un rapport non synchronisé dont le passage est commandé par déplacement axial d'un second coulisseau, parallèlement au premier coulisseau et dans le sens opposé au sens de passage de ce dernier, au moyen d'un doigt préalablement amené en vis-à-vis d'un élément d'entraînement, solidaire du second coulisseau, par un mouvement de sélection de même sens et d'amplitude égale ou supérieure à ceux du mouvement de sélection du rapport synchronisé, le dispositif comportant également des moyens provoquant une partie dudit déplacement axial du premier coulisseau, lors du mouvement de sélection du rapport non synchronisé, de façon à entraîner le synchroniseur préalablement au passage du rapport non synchronisé, caractérisé en ce que lesdits moyens comportent une rampe, formée sur une partie de la crosse de commande du premier coulisseau avec laquelle coopère le doigt de commande du rapport synchronisé lorsque le doigt de commande du rapport non synchronisé est amené en vis-à-vis de l'élément d'entraînement.

Selon une autre caractéristique de l'invention, et notamment dans le cas où la boîte de vitesses est une boîte possédant trois axes de passage, chacun des deux coulisseaux est équipé d'un dispositif de billage de point mort, le dispositif de billage associé au second coulisseau étant taré élastiquement de manière à immobiliser axialement ce dernier par rapport au carter de la boîte de vitesses lorsque le doigt de commande du rapport synchronisé coopère avec la rampe.

Selon un mode de réalisation particulièrement avantageux de l'invention, les deux coulisseaux sont coaxiaux et mobiles axialement par rapport à l'autre d'une course maximale sensiblement égale à ladite partie du déplacement axial du premier coulisseau, la crosse comprenant une première partie solidaire du premier coulisseau et sur laquelle est formée la rampe, et une seconde partie solidaire du second coulisseau, disposée en vis-à-vis de la première partie, et que constitue l'élément d'entraînement, les deux doigts de commande des rapports synchronisé et non synchronisé étant constitués par un doigt de commande unique.

Selon un autre mode de réalisation de l'invention, et dans le cas d'une boîte de vitesses comportant quatre couloirs de passage parallèles, le doigt de commande du rapport synchronisé et le doigt de commande du rapport non synchronisé sont deux doigts distincts liés en translation et en rotation à un arbre de commande monté coulissant et rotatif dans le carter de la boîte de vitesses, la crosse comportant une saillie, disposée en vis-à-vis de la rampe, avec laquelle coopère le doigt de commande du rapport synchronisé, en fin de passage du rapport non synchronisé, de façon à ramener le premier coulisseau dans sa position de point mort.

Selon l'invention le rapport non synchronisé est la marche arrière et le rapport synchronisé est le rapport de marche avant de rang le plus élevé.

D'autres caractéristiques et avantages de l'invention apparaîtront à la lecture de la description détaillée qui va suivre pour la compréhension de laquelle on se reportera aux dessins annexés dans lesquels :

- La figure 1 est une vue simplifiée, en coupe partielle, d'une boîte de vitesses à cinq rapports de marche avant et un rapport de marche arrière, à trois axes de passage, équipée d'un dispositif de freinage de pignons réalisé conformément aux enseignements de l'invention;
- la figure 2 est une vue en coupe selon la ligne 2-2 de la figure 1 ;
- la figure 3 est une vue partielle en perspective selon la flèche F de la figure 2, le doigt de commande étant engagé dans la crosse du coulisseau associé à la marche arrière et au cinquième rapport de marche avant ;

- la figure 4 est une vue partielle selon la flèche F de la figure 2, le doigt de commande étant engagé dans la crosse associée aux troisième et quatrième rapports de marche avant ;

- les figures 5a et 5b sont des vues en coupe partielle selon la ligne 5-5 de la figure 4 ;

- la figure 6 est une vue schématique en perspective d'un dispositif de freinage de pignons selon l'invention utilisé dans une boîte de vitesses à quatre couloirs de passage, le levier de changement de vitesses étant en position de point mort entre les troisième et quatrième rapports ;

- la figure 7a est une vue en coupe selon la ligne 7-7 de la figure 6 ;

- la figure 7b est une vue similaire à celle de la figure 7a lors du début du mouvement de sélection du rapport non synchronisé ; et

- la figure 7c est une vue similaire à celle de la figure 7a à l'issue du mouvement de sélection du rapport non synchronisé.

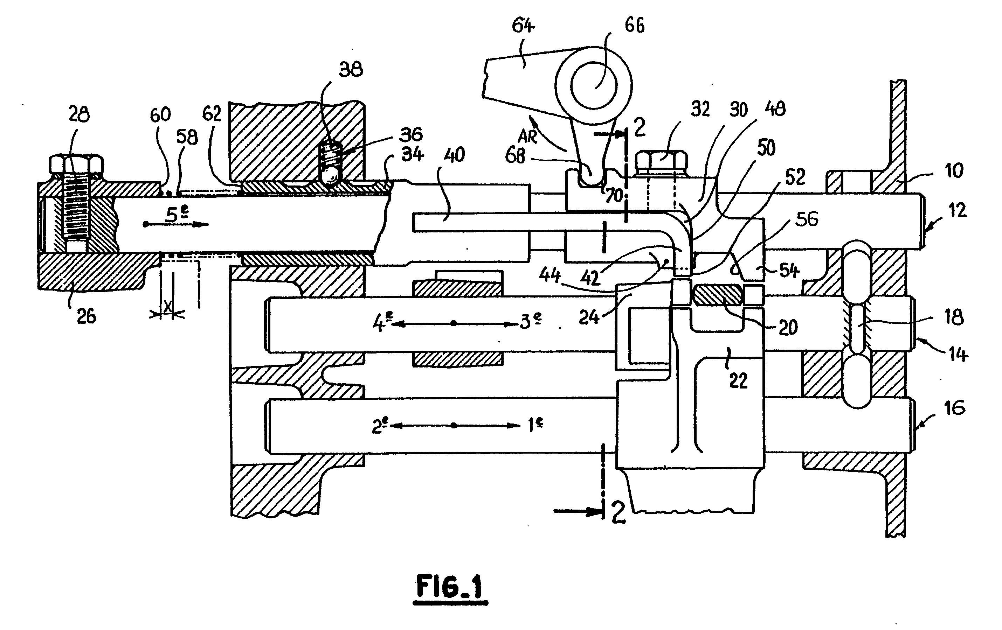

On a représenté à la figure 1 un dispositif de commande interne d'une boîte de vitesses dont on peut voir une partie du carter 10. La boîte de vitesses représentée est une boîte de vitesses à cinq rapports de marche avant et un rapport de marche arrière et à trois axes de passage 12, 14 et 16.

Les trois axes de passage 12, 14 et 16 sont montés coulissants et parallèles entre eux à l'intérieur du carter 10. Les trois axes de passage 12, 14 et 16 qui sont représentés au point mort portent, dans un même plan vertical perpendiculaire à leur direction de déplacement axial, un ou deux fraisages cylindriques, l'axe central 14 comportant en outre au droit de ces fraisages un bonhomme 18 coulissant dans un perçage et qui n'entre en jeu que lors du déplacement d'un axe de passage extérieur 12 ou 16.

L'axe de passage inférieur 16 commande, sous l'action d'un doigt de commande 20 qui coopère avec une crosse de passage 22, le passage du premier ou du second rapport de marche avant selon que l'axe est déplacé axialement, respectivement vers la droite ou vers la gauche en considérant la figure 1. L'axe de passage central 14 commande, sous l'action du doigt 20 qui coopère avec une crosse de commande 24, le passage du troisième ou du quatrième rapport de marche avant selon que l'axe de commande 14 est déplacé axialement vers la droite ou respectivement vers la gauche. L'axe de passage supérieur 12 commande, d'une façon qui sera décrite plus avant, le passage du cinquième rapport de marche avant, ou du rapport de marche arrière selon que l'axe de passage 12 est déplacé axialement vers la droite ou respectivement vers la gauche par le doigt de commande 20.

Le cinquième rapport de marche avant, qui dans cette boîte de vitesses est le rapport de marche avant de rang le plus élevé, est équipé d'un synchroniseur à friction (non représenté) qui est actionné par une fourchette 26, d'actionnement du synchroniseur et de passage du cinquième rapport, qui est fixée à l'extrémité libre gauche du premier axe de passage 12 au moyen d'une vis 28 qui l'immobilise en translation et en rotation. L'actionnement de la fourchette 26 est effectué au moyen d'un coulisseau 30 monté sur le premier axe de passage 12 au moyen d'une vis 32 qui l'immobilise en translation et en rotation sur l'axe de passage 12. L'axe de passage cylindrique 12, la fourchette 26, et le coulisseau 30 forment ainsi une unité structurelle qui peut se déplacer axialement par rapport au carter de la boîte de vitesses 10.

Un second coulisseau 34 est monté sur l'axe de passage 12 par rapport auquel il peut coulisser axialement. Le second coulisseau 34 est équipé d'un dispositif de billage de point mort 36, taré élastiquement par un ressort 38, qui permet d'immobiliser axialement le second coulisseau 34 par rapport au carter 10 de la boîte de vitesses, notamment dans sa position de point mort représentée à la figure 1. Le second coulisseau 34 est muni d'un prolongement axial 40 s'étendant vers la droite, en considérant la figure 1, et dont l'extrémité est repliée à 90° de façon à constituer un élément d'entraînement 42 du second coulisseau 34 qui s'étend dans un plan sensiblement perpendiculaire à l'axe de déplacement du coulisseau 34. Dans le mode de réalisation représenté à la figure 1, le prolongement axial 40 est formé d'un barreau soudé à la surface externe sensiblement cylindrique du second coulisseau 34.

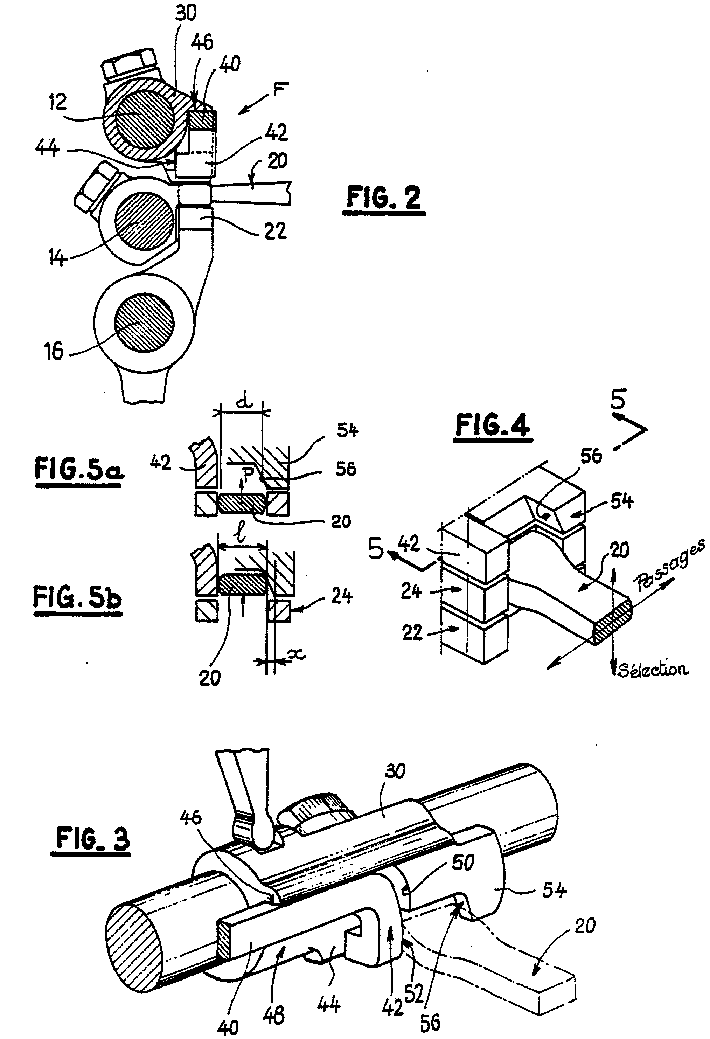

Comme on peut le constater, notamment aux figures 2 et 3, le prolongement axial 40 du coulisseau 34 et son extrémité repliée 42 coulissent sur une première surface de guidage verticale 44, en considérant les figures 2 et 3, ainsi que sur une surface horizontale 46 qui sont toutes les deux formées dans le premier coulisseau 30 dont elles délimitent une portion encochée à angle droit 48. La portion encochée 48 est également délimitée axialement vers la droite par une paroi transversale de butée 50 qui coopère avec la face latérale en vis-à-vis 52 de l'extrémité d'entraînement 42 du prolongement 40 du second coulisseau 34. Les surfaces de guidage 44 et 46, en coopération avec le prolongement 40 du second coulisseau 34, immobilise ce dernier en rotation par rapport à l'axe de passage 12.

L'élément d'entraînement 42 constitue la première partie d'une crosse de coulisseau en deux parties dont la seconde partie est formée par un prolongement 54 venu de matière avec le coulisseau 30. Comme on peut le constater aux figures 1 à 4, l'élément d'entraînement 42 et la seconde partie 54 de la crosse sont disposés en vis-à-vis l'un de l'autre de manière à former une crosse à l'intérieur de laquelle est susceptible de s'engager le doigt de commande 20.

Le doigt de commande 20 qui, dans ce mode de réalisation, est un doigt de commande unique pour la sélection et le passage du cinquième rapport de marche avant ou de la marche arrière, est relié au levier de changement de vitesses (non représenté). Le doigt de commande 20 peut se déplacer selon une première direction, s'étendant dans un plan perpendiculaire aux axes de passage 12, 14 et 16, appelée direction de sélection. Il effectue des mouvements de sélection, verticalement vers le haut ou vers le bas en considérant les figures 1 à 4, pour venir s'engager dans l'une des crosses 22, 24 ou dans la troisième crosse formée des deux parties 42 et 54, selon le groupe de deux rapports parmi lesquels figure le rapport que l'on veut sélectionner en vue de son passage ultérieur. Aux figures 1, 2 et 4, le doigt de commande 20 est représenté dans sa position dite de point mort dans laquelle il est engagé dans la crosse 24 de passage des troisième et quatrième rapports de marche avant.

Le doigt de commande 20 peut se déplacer selon une seconde direction, perpendiculaire à la direction de sélection, selon deux sens de passage opposés correspondant au passage de l'un ou de l'autre des deux rapports associés à la crosse dans laquelle il a été préalablement engagé.

Conformément à l'invention, la boîte de vitesses représentée aux figures 1 à 5 comporte un dispositif de freinage de pignons comportant des moyens provoquant une partie du déplacement axial du premier coulisseau 30, lors du mouvement de sélection du rapport de marche arrière non synchronisé, de façon à entraîner le synchroniseur du cinquième rapport de marche avant préalablement au passage du rapport de marche arrière.

Ces moyens sont constitués par une rampe inclinée 56 formée sur la première partie 54, solidaire du premier coulisseau 30, de la crosse en deux parties associée à l'axe de passage supérieur 12. La rampe 56 est orientée et dimensionnée de façon que, lorsque les deux parties 42 et 54 de la crosse sont en butée l'une contre l'autre, la distance moyenne "d" séparant la rampe 56 de l'élément d'entraînement 42 soit inférieure à la largeur axiale "1" du doigt de commande 20.

Les deux coulisseaux 30 et 34, et donc les deux parties 42 et 54 de la crosse, sont sollicités élastiquement, dans une direction correspondant au rapprochement des deux parties de la crosse et à la coopération des surfaces de butée en vis-à-vis 50 et 52, au moyen d'un ressort de compression 58. Le ressort de compression 58 est disposé entre un épaulement 60 de la fourchette 26 et un épaulement en vis-à-vis 62 du second coulisseau 34. Le ressort 58 est susceptible d'être comprimé axialement entre les épaulements 60 et 62, jusqu'à ce que ses spires deviennent jointives, d'une course maximale "x" qui détermine le débattement relatif maximal entre le premier coulisseau 30 et le second coulisseau 34 et donc l'écartement maximal possible entre l'élément d'entraînement 42 et la première partie 54 de la crosse. En variante, ce débattement et cet écartement maximal sont procurés par mise en contact de faces en vis-à-vis de parties extrêmes respectives des coulisseaux 30 et 34, les spires du ressort 58 n'étant alors plus jointives.

On décrira maintenant le mode de fonctionnement du dispositif de freinage selon l'invention en partant de la position de repos du doigt de commande 20 représentée aux figures 1, 2, 4 et 5a.

A partir de la position de point mort du doigt de commande 20, un mouvement de sélection vers le haut de ce dernier provoque son engagement entre les deux parties 42 et 54. Lors de cet engagement, la surface périphérique du doigt de commande 20 coopère avec la rampe 56 de façon à provoquer un déplacement axial, vers la droite, de la première partie de la crosse 54. Ce déplacement axial de la partie 54 provoque un déplacement axial de même valuer du premier coulisseau 30 dans le sens correspondant au passage du cinquième rapport de marche avant.

Conformément à l'invention, le tarage élastique du billage de point mort 36 du second coulisseau 34 possède une valeur suffisamment élevée de manière à immobiliser axialement le second coulisseau 34 par rapport au carter 10 lorsque le doigt de commande 20 coopère avec la rampe 56, et à permettre à l'élément d'entraînement 42 d'encaisser l'effort de réaction à la poussée P exercée sur le doigt de commande 20.

A la fin de son mouvement de sélection, le doigt de commande 20 est totalement engagé à l'intérieur de la crosse en deux parties dont il a provoqué un écartement axial d'une valeur x égale à la valeur maximale de débattement relatif possible entre les deux coulisseaux 30 et 34, le ressort 58 étant alors comprimé de cette valeur x et ses spires étant jointives.

Lors du mouvement de sélection, le déplacement vers la droite du premier coulisseau 30, d'une course égale à une partie du déplacement nécessaire au passage complet du cinquième rapport de marche avant, a pour effet de provoquer un entraînement du synchroniseur au moyen de la fourchette 26.

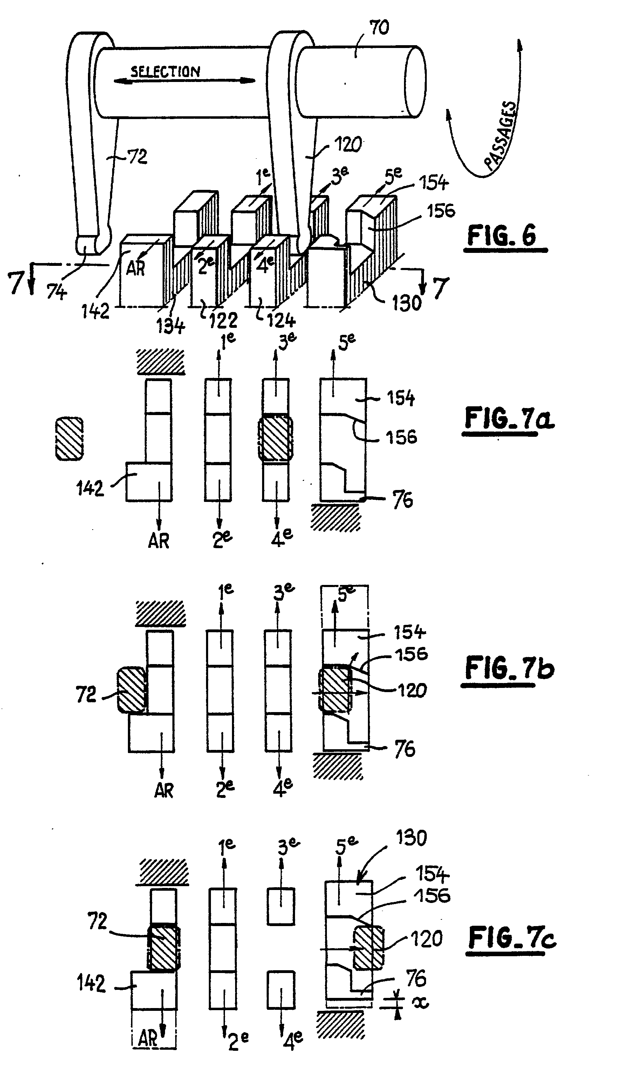

Le passage du rapport de marche arrière s'effectue, après le mouvement de sélection qui vient d'être décrit, en provoquant un déplacement axial du second coulisseau 34 vers la gauche, au moyen du doigt de commande 20. En partant de la position représentée aux figures 3 et 5b, dans laquelle les surfaces en vis-à-vis 50 et 52 sont désormais écartées l'une de l'autre, un actionnement du doigt de commande par le levier de changement de vitesses vers la gauche a pour effet de provoquer l'entraînement du second coulisseau 34. Le déplacement du second coulisseau 34, à l'encontre de l'effort élastique exercé par le dispositif de billage 36 provoque, par l'intermédiaire du ressort 58 dont les spires sont jointives, ou en variante, par l'intermédiaire des susdites faces en vis-à-vis, l'entraînement de la fourchette 26 et ainsi du premier coulisseau 30 par rapport au carter 10 de la boîte de vitesses. Le déplacement vers la gauche du second coulisseau 30, c'est-à-dire dans le sens opposé au sens de passage du cinquième rapport de marche avant, provoque la rotation d'une fourchette 64 de passage de la marche arrière montée pivotante autour d'un axe 66 du carter 10 et dont une extrémité 68 est reçue dans une encoche correspondante 70 du premier coulisseau 30. Le déplacement de celui-ci provoque en outre le débrayage du synchroniseur du cinquième rapport, ce qui rend libre l'engagement des dentures de marche arrière.

En partant de la position représentée aux figures 3 et 5b, le passage du cinquième rapport de marche avant s'effectue, de manière classique, en déplaçant le doigt de commande 20 vers la droite de manière à entraîner directement le premier coulisseau 30 dans la même direction et ainsi la fourchette de passage 26. L'action du synchroniseur s'effectuant dès le mouvement de sélection, la course du coulisseau 30, et par suite du levier de changement de vitesses, pour le passage du cinquième rapport, est plus courte que dans les dispositifs usuels de commande où le synchroniseur agit lors du déplacement du coulisseau.

La sélection et le passage des quatre premiers rapports de marche avant s'effectue d'une manière classique qui ne sera pas décrite ici.

On décrira maintenant un second mode de réalisation du dispositif selon l'invention appliqué à une boîte de vitesses à quatre couloirs de passage. Dans cette description, les éléments identiques ou équivalents à ceux du premier mode de réalisation sont désignés par les mêmes chiffres de référence augmentés de 100.

Le dispositif de commande la boîte de commande représenté aux figures 6 à 7c permet la commande du changement de rapport d'une boîte de vitesses à cinq rapports de marche avant et à un rapport de marche arrière. Les éléments mobiles usuels non représentés, pour l'engagement alternatif d'engrenages correspondant aux divers rapports, peuvent être déplacés à l'aide de quatre crosses coulissantes respectivement solidaires de quatre coulisseaux parallèles qui sont agencés dans le carter de la boîte de vitesses. Les deux crosses centrales 122 et 124 sont associées à deux coulisseaux de façon à permettre, d'une manière classique, le passage des quatre premiers rapports de marche avant.

La crosse latérale de droite, solidaire d'un premier coulisseau 130 permet la sélection et le passage du cinquième rapport de marche avant. A cet effet elle comporte une branche verticale 154 avec laquelle est susceptible de coopérer un premier doigt de commande 120 du cinquième rapport de marche avant synchronisé. Le doigt de commande 120 est immobilisé en rotation et en translation par rapport à un arbre de commande 70 de la sélection et du passage des vitesses, monté coulissant et rotatif dans le carter de la boîte de vitesses. Un second doigt de commande 72 est monté sur l'arbre de commande 70 par rapport auquel il est également immobilisé en translation et en rotation. L'extrémité inférieure 74 du second doigt de commande 72 est susceptible de coopérer avec un élément d'entraînement 142 formé par une branche verticale d'un second coulisseau 134 auquel est relié le pignon du rapport de marche arrière non synchronisé.

Le passage du cinquième rapport de marche avant synchronisé s'effectue en faisant coulisser le premier coulisseau 130 parallèlement à sa direction de passage, c'est-à-dire selon une direction perpendiculaire à la direction de sélection qui est parallèle à l'axe de commande 70. Le passage du rapport de marche arrière s'effectue en provoquant un déplacement du second coulisseau 134 parallèlement à la direction de passage du cinquième rapport de marche avant mais dans le sens opposé au sens de passage de ce dernier rapport.

Conformément à l'invention, la partie de crosse 154 du premier coulisseau 130 comporte une rampe 156 avec laquelle coopère le premier doigt de commande 120 du cinquième rapport de marche avant synchronisé lorsque qu'il est déplacé, dans la direction de sélection, vers la droite en considérant les figures, jusqu'à ce qu'il soit complètement engagé à l'intérieur de la crosse du premier coulisseau 130 et tel que représenté à la figure 7c. Etant donné que le second doigt de commande 72 est lié en translation au premier doigt de commande 120, le déplacement de ce dernier vers la droite provoque un déplacement du second doigt de commande 72 de façon que ce dernier soit amené simultanément en vis-à-vis de l'élément d'entraînement 142 du second coulisseau 134 comme on peut le constater aux figures 7b et 7c.

L'engagement du premier doigt de commande 120 à l'intérieur de la crosse du premier coulisseau 130 provoque un déplacement, vers le haut en considérant les figures 7a à 7c, de la partie de crosse 154 et donc du premier coulisseau 130 d'une course "x" dont la valeur est déterminée par le profil et l'orientation de la rampe 156.

Le déplacement du premier coulisseau 130 d'une course "x" égale à une partie de son déplacement axial dans le sens du passage de la cinquième vitesse a pour effet de provoquer l'entraînement du synchroniseur équipant le cinquième rapport de marche avant et donc de provoquer un freinage du pignon d'entrée de la boîte de vitesses.

Le passage du rapport de marche arrière, en partant de la position illustrée à la figure 7c, s'effectue au moyen du levier de changement de vitesses qui provoque une rotation de l'arbre de commande 70 de manière à déplacer l'extrémité libre 74 du second doigt de commande 72, vers le bas en considérant la figure 7c, pour entraîner l'élément d'entraînement 142. Afin d'assurer le retour à sa position de point mort du premier coulisseau 130, la crosse équipant ce dernier comporte une saillie 76. La saillie 76 s'étend verticalement et est disposée en vis-à-vis de la rampe 156. Le premier doigt de commande 120 coopère avec la saillie 76, lors de la fin de l'opération de passage du rapport de marche arrière non synchronisé, de façon à ramener le premier coulisseau 130 dans sa position de point mort représentée entrait mixte à la figure 7c.

Grâce à l'invention qui vient d'être décrite, et selon ses deux modes de réalisation, on a réalisé un dispositif de freinage de pignons qui utilise un engagement et un entraînement partiel du synchroniseur du cinquième rapport de marche avant qui est provoqué par le mouvement de sélection du rapport de marche arrière non synchronisé. Le dispositif proposé, simple et fiable, en particulier grâce à la coopération directe du doigt avec une rampe agencée sur le coulisseau du rapport le plus long, agit efficacement lors de chaque opération de passage de la marche arrière et évite les craquements indésirables de la pignonerie de la boîte de vitesses, notamment grâce au débrayage positif du synchroniseur en fin de course correspondant à ce passage.

**Revendications**

1. Dispositif de freinage de pignons d'une boîte de vitesses de véhicule automobile comportant au moins un rapport (5ème) équipé d'un synchroniseur à friction actionné par un premier coulisseau (30, 130) dont le déplacement axial, dans le sens du passage, est commandé par un doigt (20, 120) préalablement engagé dans une crosse de commande (42-54-142-154) solidaire du coulisseau, depuis une position de point mort, par un mouvement de sélection selon une direction perpendiculaire à l'axe de déplacement du coulisseau, et un rapport non synchronisé (AR) dont le passage est commandé par déplacement axial d'un second coulisseau (34, 134), parallèlement au premier coulisseau et dans le sens opposé au sens de passage de ce dernier, au moyen d'un doigt (20, 72) préalablement amené en vis-à-vis d'un élément d'entraînement (42, 142) solidaire du second coulisseau, par un mouvement de sélection de même sens et d'amplitude égale ou supérieure à ceux du mouvement de sélection du rapport synchronisé, le dispositif comportant également des moyens provoquant une partie (x) dudit déplacement axial du premier coulisseau, lors du mouvement de sélection du rapport non synchronisé, de façon à entraîner le synchroniseur préalablement au passage du rapport non synchronisé, caractérisé en ce que lesdits moyens comportent une rampe (56, 156), formée sur une partie (54, 154) de la crosse de commande du premier coulisseau, avec laquelle coopère le doigt de commande (20, 120) du rapport synchronisé lorsque le doigt de commande du rapport non synchronisé est amené en vis-à-vis de l'élément d'entraînement.

2. Dispositif de freinage de pignons selon la revendication 1 caractérisé en ce que chacun des deux coulisseaux est équipé d'un dispositif de billage de point mort et en ce que celui (36) associé au second coulisseau est taré élastiquement de manière à immobiliser axialement ce dernier par rapport au carter (10) de la boîte de vitesses lorsque le doigt de commande du rapport synchronisé coopère avec ladite rampe (56).

3. Dispositif de freinage de pignons selon l'une des revendications 1 ou 2 caractérisé en ce que les deux coulisseaux (30, 34) sont coaxiaux et mobiles axialement l'un par rapport à l'autre d'une course maximale sensiblement égale à ladite partie (x) du déplacement axial du premier coulisseau, en ce que ladite crosse comprend une première partie (54) solidaire du premier coulisseau (30) et sur laquelle est formée ladite rampe (56), et une seconde partie (42) solidaire du second coulisseau (34), disposée en vis-à-vis de la première partie, et qui constitue ledit élément d'entraînement, et en ce que les doigts de commande des rapports synchronisé et non synchronisé sont un doigt unique (20).

4. Dispositif de freinage de pignons selon la revendication 3 caractérisé en ce qu'il comporte un ressort de rappel (58) qui sollicite élastiquement les deux parties (42, 54) de la crosse en butée l'une contre l'autre.

5. Dispositif de freinage de pignons selon la revendication 4 caractérisé en ce que le ressort de rappel (58) est un ressort de compression coaxial aux deux coulisseaux et dont la course maximale de compression à spires jointives est égale à ladite course maximale de débattement relatif des deux coulisseaux.

6. Dispositif de freinage de pignons selon l'une des revendications 3 ou 4, caractérisé en ce que la course maximale entre les deux coulisseaux (30, 34) est obtenue par mise en contact de deux faces en vis-à-vis de parties extrêmes respectives de ces deux coulisseaux.

7. Dispositif de freinage de pignons selon l'une des revendications 1 ou 2, caractérisé en ce que le doigt de commande (120) du rapport synchronisé et le doigt de commande (72) du rapport non synchronisé sont deux doigts distincts liés en translation et en rotation à un arbre de commande (70) monté coulissant et rotatif dans le carter de la boîte de vitesses, et en ce que ladite crosse comporte une saillie (76), disposée en vis-à-vis de ladite rampe (156), avec laquelle coopère le doigt de commande (120) du rapport synchronisé, en fin de passage du rapport non synchronisé, de façon à ramener le premier coulisseau (130) dans sa position de point mort.

8. Dispositif de freinage de pignons selon l'une quelconque des revendications précédentes caractérisé en ce que le rapport non synchronisé est la marche arrière et en ce que le rapport synchronisé est le rapport de marche avant de rang le plus élevé.

**Patentansprüche**

1. Zahnradbremsvorrichtung eines Schaltgetriebes eines Kraftfahrzeuges, das mindestens eine Übersetzung (5-te) aufweist, die mit einem Reibungs-Synchronkörper ausgestattet ist, der durch ein erstes Gleitstück (30, 130) betätigt wird, dessen Axialbewegung, im Sinne des Einlegens, durch einen Finger (20, 120) gesteuert wird, der vorab in einem mit dem Gleitstück fest verbundenen Steuerkreuzkopf (42-54-142-154) eingreift, ausgehend von einer Totpunktlage durch eine Wahlbewegung in einer Richtung senkrecht zur Bewegungsachse des Gleitstückes, sowie eine nicht synchronisierte Übersetzung (AR), deren Einlegen durch die axiale Verschiebung eines zweiten Gleitstückes (34, 134) parallel zum ersten Gleitstück und in einer Richtung gesteuert wird, die entgegengesetzt zur Richtung des Einlegens des letzteren ist, mit Hilfe eines Fingers (20, 72), der vorab gegenüber einem Mitnehmerelement (42, 142) gebracht wird, das mit dem zweiten Gleitstück fest verbunden ist, mittels einer Wahlbewegung mit gleicher Richtung und einer Amplitude, die gleich gross wie oder grösser als jene der Wahlbewegung für die synchronisierte Übersetzung ist, wobei die Vorrichtung gleichermassen Einrichtungen aufweist, die einen Teil (x) der genannten Axialbewegung des ersten Gleitstückes während der Wahlbewegung für die nicht synchronisierte Übersetzung in solcher Weise veranlassen, dass sie den Synchronkörper vor dem Einlegen der nicht synchronisierten Übersetzung mitnehmen, dadurch gekennzeichnet, dass die genannten Einrichtungen eine Schrägfläche (56, 156) aufweisen, die auf einem Abschnitt (54) des Steuerkreuzkopfes des ersten Gleitstückes gebildet wird, mit welchem der Steuerfinger (20, 120) der synchronisierten Übersetzung zusammenarbeitet, wenn der Steuerfinger der nicht synchronisierten Übersetzung dem Mitnehmerelement gegenüberliegend herangeführt wird.

2. Zahnradbremsvorrichtung nach Anspruch 1, dadurch gekennzeichnet, dass jedes der beiden Gleitstücke mit einer Totpunkt-Arretierungseinrichtung versehen ist und dass jene (36), die dem zweiten Gleitstück zugeordnet ist, derart federnd belastet wird, um das zweite Gleitstück gegenüber dem Gehäuse (10) des Schaltgetriebes axial festzusetzen, wenn der Steuerfinger der synchronisierten Übersetzung mit der genannten Schrägfläche (56) zusammenwirkt.

3. Zahnradbremsvorrichtung nach einem der Ansprüche 1 oder 2, dadurch gekennzeichnet, dass die beiden Gleitstücke (30, 34) koaxial liegen und axial relativ zueinander um eine maximale Strecke beweglich sind, die im wesentlichen gleich dem genannten Teil (x) der Axialbewegung des ersten Gleitstückes ist, dass der genannte Steuerkreuzkopf einen ersten Abschnitt (54) aufweist, der fest mit dem ersten Gleitstück (30) verbunden ist und auf dem die genannte Schrägfläche (56) gebildet wird, und einen zweiten Abschnitt (42), der fest mit dem zweiten Gleitstück (34) verbunden ist und der dem ersten Abschnitt gegenüberliegt und das genannte Mitnehmerelement bildet, und dass die Steuerfinger der synchronisierten und der nicht synchronisierten Übersetzung ein einzelner Finger (20) sind.

4. Zahnradbremsvorrichtung nach Anspruch 3, dadurch gekennzeichnet, dass sie eine Rückholfeder (58) aufweist, die die beiden Abschnitte (42, 54) des Steuerkreuzkopfes zum Anschlag gegeneinander treibt.

5. Zahnradbremsvorrichtung nach Anspruch 4, dadurch gekennzeichnet, dass die Rückholfeder (58) eine Druckfeder ist, die koaxial zu den beiden Gleitstücken liegt und deren maximaler Kompressionsweg mit aneinanderliegenden Windungen gleich der genannten maximalen Strecke der Relativbewegung der beiden Gleitstücke ist.

6. Zahnradbremsvorrichtung nach einem der Ansprüche 3 oder 4, dadurch gekennzeichnet, dass die maximale Strecke zwischen den beiden Gleitstücken (30, 34) erhalten wird, indem die beiden gegenüberliegenden Seiten der jeweiligen Endabschnitte dieser beiden Gleitstücke in Anlage gebracht werden.

7. Zahnradbremsvorrichtung nach einem der Ansprüche 1 oder 2, dadurch gekennzeichnet, dass der Steuerfinger (120) der synchronisierten Übersetzung und der Steuerfinger (72) der nicht synchronisierten Übersetzung zwei getrennte Finger sind, die für eine Translation und Drehung mit einer Steuerwelle (70) verbunden sind, die verschiebbar und drehbar im Gehäuse des Schaltgetriebes montiert ist, und dass der genannte Steuerkreuzkopf einen Vorsprung (76) aufweist, der gegenüber der Schrägfläche (156) angeordnet ist und mit welchem der Steuerfinger (120) der synchronisierten Übersetzung am Ende des Durchlaufs der nicht synchronisierten Übersetzung derart zusammenarbeitet, dass das erste Gleitstück (130) in seine Totpunktlage gebracht wird.

8. Zahnradbremsvorrichtung nach irgendeinem der vorausgehenden Ansprüche, dadurch gekennzeichnet, dass die nicht synchronisierte Übersetzung den Rückwärtsgang bildet und dass die synchronisierte Übersetzung der Vorwärtsgang der höchsten Stufe ist.

## Claims

1. Gear-pinion brake device of a motor-vehicle gearbox, comprising at least one gear (5th) equipped with a friction synchroniser actuated by a first slide (30, 130) the axial movement of which in the changing direction is controlled by a finger (20, 120) previously engaged in a control crosshead (42–54–142–154) fixed to the slide, from a dead-centre position as a result of a selecting movement in a direction perpendicular to the axis of movement of the slide, and a non-synchronised gear (reverse), the changing of which is controlled by the axial movement of a second slide (34, 134) in parallel with the first slide and in the opposite direction to the changing direction of the latter, by means of a finger (20, 72) previously brought opposite a driving element (42, 142) fixed to the second slide, as a result of a selecting movement in the same direction as and of an amount equal to or greater than those of the selecting movement of the synchronised gear, the device also comprising means causing a part (x) of the said axial movement of the first slide during the selecting movement of the non-synchronised gear, so as to drive the synchroniser before the changing of the non-synchronised gear, characterized in that the said means comprise a ramp (56, 156) which is formed on a part (54, 154) of the control crosshead of the first slide and with which the control finger (20, 120) of the synchronised gear interacts when the control finger of the non-synchronised gear is brought opposite the driving element.

2. Gear-pinion brake device according to Claim 1, characterized in that each of the two slides is equipped with a dead-centre ball-catch device, and in that that (36) associated with the second slide is calibrated elastically so as to immobilise the latter axially in relation to the housing (10) of the gearbox when the control finger of the synchronised gear interacts with the said ramp (56).

3. Gear-pinion brake device according to one of Claims 1 or 2, characterized in that the two slides (30, 34) are coaxial and movable axially relative to one another over a maximum stroke substantially equal to the said part (x) of the axial movement of the first slide, in that the said crosshead comprises a first part (54) which is fixed to the first slide (30) and on which the said ramp (56) is formed and a second part (42) which is fixed to the second slide (34) and is located opposite the first part and which constitutes the said driving element, and in that the control fingers of the synchronised gear and of the non-synchronised gear are a single finger (20).

4. Gear-pinion brake device according to Claim 3, characterized in that it comprises a restoring spring (58) which stresses the two parts (42, 54) of the crosshead elastically up against one another.

5. Gear-pinion brake device according to Claim 4, characterized in that the restoring spring (58) is a compression spring which is coaxial with the two slides and of which the maximum compression stroke with contiguous turns is equal to the said maximum stroke of relative movement of the two slides.

6. Gear-pinion brake device according to one of Claims 3 or 4, characterized in that the maximum stroke between the two slides (30, 34) is obtained by bringing two mutually confronting faces of respective end parts of these two slides into contact with one another.

7. Gear-pinion brake device according to one of Claims 1 or 2, characterized in that the control finger (120) of the synchronised gear and the control finger (72) of the non-synchronised gear are two separate fingers connected in terms of translational and rotational motion to a control shaft (70) mounted slidably and rotatably in the housing of the gearbox, and in that the said crosshead comprises a projection (76) located opposite the said ramp (156) with which the control finger (120) of the synchronised gear interacts at the end of changing of the non-synchronised gear, so as to return the first slide (130) into its dead-centre position.

8. Gear-pinion brake device according to any one of the preceding claims, characterized in that the nonsynchronised gear is the reverse gear, and in that the synchronised gear is the highest forward gear.

**FIG.1**

EP 0 300 843 B1

**FIG. 2**

**FIG.5a**

**FIG.5b**

**FIG.4**

**FIG. 3**

**FIG. 6**

**FIG. 7a**

**FIG. 7b**

**FIG. 7c**